# EUROPÄISCHE PATENTANMELDUNG

(11) **EP 0 624 314 A2**
(43) Veröffentlichungstag der Anmeldung: **17.11.1994**
(21) Anmeldenummer: 94105599.8
(22) Anmeldetag: 12.04.1994
(51) Int. Cl.: A01K 93/00

(54) **Tunnelschnuröse für Angelposen**

(30) Priorität: 14.04.1993 DE 4312213; 28.12.1993 DE 4344270
(71) Anmelder: Thiemann, Gerhard, D-71711 Murr (DE)
(72) Erfinder: Thiemann, Gerhard, D-71711 Murr (DE)

(57) **Zusammenfassung**

Es wird eine von einer Angelschnur ausgehende Tunnelschnuröse vorgeschlagen, die für den Einsatz von Angelposen mit unterschiedlicher Gestalt vorgesehen ist. Diese Tunnelschnuröse 1 weist zumindest an einem Ende eine umlenkbar angeordnete komplementäre Basisplatte 3 auf, welcher als Befestigungsmittel ein Rastzapfen 4 zugeordnet ist, wobei auf der Basisplatte 3 anstelle des Rastzapfens 4 ein Loch als ergänzendes Befestigungsmittel in Frage kommt. Die Ausmaße bei einem solchen Loch sind dabei so gehalten, daß der Rastzapfen 4 im entsprechenden Loch einerseits selbsthemmend mit der Rückseite und andererseits einrastend mit der Vorderseite, gehaltert werden kann. Besitzt die Tunnelschnuröse 1 beidseitig eine Basisplatte 3, erübrigt sich der aus zwei Ringen bestehende Halter 7.

## Beschreibung

Die Erfindung betrifft eine Tunnelschnuröse für Angelposen der im Oberbegriff des Anspruchs 1 näher bezeichneten Ausführung.

Von auf dem Markt erhältlichen Angelposen sind bereits Schnurösen bekannt, die aus einem einstückigen Metallteil oder Kunststoffteil bestehen. Diese Schnurösen werden - ähnlich wie bei englischen Wagglerposen - nur am unteren Ende fixiert. Derartige Schnurösen sind mechanischen Schadeinwirkungen besonders stark ausgesetzt und erfordern bei der Montage einen nicht unerheblichen Arbeitsaufwand.

Tunnelschnurösen die ihre Anwendung bei Angelposen finden sind durch das DE-GM 69 25 506 und die FR 25 66 233 A1 bekannt. Durch das DE-GM ist ein aus einem Kunststoffkörper mit einem Loch 5 in einer Erweiterung 4 bestehender Klemmring 1 bekannt, welcher auf der der Erweiterung 4 mit dem Loch 5 abgekehrten Seite eine weitere Erweiterung 3 hat. Das im Querschnitt für das Hindurchgleiten einer Angelschnur ausgelegte Loch 5, ist mit einer Metallöse 6 ausgefüttert. Aus der FR 25 66 233 A1 ist ein aus einem elastischen Draht - Faden - Garn 2 spiralförmig zusammengefügter Ring in der Gestalt einer schraubenförmigen Aufrollung 1 bekannt, die eine gleichartig ausgeführte, jedoch an der Unterseite nach außen umgelenkte Aufrollung 3 hat. Die Aufrollung 3 ist im Querschnitt für das Hindurchgleiten einer Angelschnur ausgelegt und im wesentlichen parallel, zur Aufrollung 1 angeordnet.

Der Erfindung liegt die Aufgabe zugrunde, bei einer Tunnelschnuröse gemäß Oberbegriff des Anspruchs 1 die Bauform so festzulegen, daß sie als Schnurführung von der Angelschnur ausgehend, für Angelposen nutzbar ist. Diese Aufgabe wird erfindungsgemäß durch die in Anspruch 1 angegebenen konstruktiven Maßnahmen gelöst. Vorteilhafte Ausführungsmerkmale sind den Unteransprüchen zu entnehmen. Damit erzielbare Vorteile sind in der nachfolgenden Beschreibung genannt.

Die Erfindung wird anhand eines in einer Zeichnung dargestellten Ausführungsbeispiels näher erläutert. In der Zeichnung zeigen:
- Fig. 1: eine gerade ausgeführte Tunnelschnuröse mit einem Halter und einem auf einer Basisplatte angeordneten Rastzapfen, perspektivisch dargestellt;
- Fig. 2: die an eine Angelpose angelegte Tunnelschnuröse der Fig. 1 in der Vorderansicht;
- Fig. 3: die Basisplatte mit einem durchgehenden Loch in der Draufsicht, von unten gesehen.

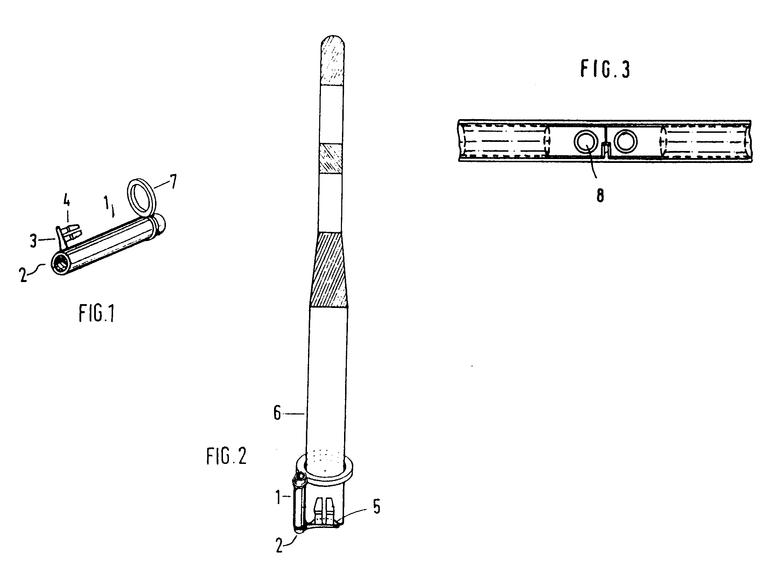

In den Fig. 1 bis 3 ist die Tunnelschnuröse insgesamt mit 1 bezeichnet. Bei der Tunnelschnuröse 1 handelt es sich um eine oberflächenmontierbare Ausführung mit niedriger Bauhöhe, die Zumindest an einer Längsseite mit einer einen Rastzapfen 4 Fig. 1 aufweisenden komplementären Basisplatte 3 versehen ist. Auf der Basisplatte 3 kann anstelle eines festsitzenden Rastzapfens 4 ein durchgehendes Loch 8 Fig. 3 angeordnet sein, in das ein auf dessen Ausmaße ausgelegter Rastzapfen in Richtung von unten nach oben oder umgekehrt eingesteckt, bzw. eingerastet werden kann. Im Längsbereich ist ein aus elastischen Material bestehender Halter 7 angeordnet, der zwei, auf einer Ebene liegende Öffnungen hat und vorzugsweise lösbar, an der Tunnelschnuröse 1 befestigt ist.

Bei dem Rastzapfen 4 Fig. 1 handelt es sich um eine in axialer Richtung geschlitzte aus zähelastischen, vorzugsweise thermoplastischen Kunststoff bestehende Ausführung, die eine einfache Befestigung der Tunnelschnuröse 1 in der entsprechenden Bohrung einer Angelpose gestattet.

Wie Fig. 1 zeigt hat die Angelpose 6 auf der Unterseite eine im Querschnitt kreisrunde Bohrung 5. Im dargestellten Ausführungsbeispiel ist die Basisplatte 3 im wesentlichen rechtwinkelig zur Seite umgelenkt und der Rastzapfen 4 in Richtung von unten nach oben in die Bohrung 5 eingesteckt, wobei die Basisplatte 3, insbesondere für die Befestigung von konisch, bzw. bojenartig gestalteten Angelposen so umlenkbar ausgelegt ist, daß ein handelsüblicher Schnurstopper bis zum Verlauf der Längsachse einer entsprechenden Angelpose gelangen kann, d.h., in Richtung entlang der Durchführungsöffnung 2.
Wird die Befestigung der Tunnelschnuröse 1 mit einen in das Loch 8 Fig. 3 einsteckbaren Rastzapfen gehandhabt, ist es vorteilhaft, wenn der entsprechende Rastzapfen zum Andrücken der Basisplatte 3 an die Bohrung 5, im rückwärtigen Bereich mit einen vorzugsweise ringförmigen Ansatz versehen ist. Im Weiteren kann die Befestigung der Tunnelschnuröse 1 mit einen entsprechenden Rastzapfen durchaus auch in entgegengesetzter Steckrichtung erfolgen, wenn z.B. der Rastzapfen im rückwärtigen Bereich so dimensioniert ist, daß er mit der Rückseite in die Bohrung 5 der Angelpose 6 eingesteckt werden kann und bei der Befestigung der Tunnelschnuröse 1, in das Loch 8 Fig. 3 einer ein derartiges Loch enthaltenden Basisplatte einrastet. Unabhängig von der Ausgestaltung der Rastmittel sind letztere so ausgelegt, daß sie selbsthemmend aneinander befestigt sind, bedarfsweise jedoch wieder voneinander getrennt werden können.

Natürlich kann die Tunnelschnuröse 1, da es sich bei ihr um eine oberflächenmontierbare Ausführung handelt, auch an beiden Längsseiten mit einer ein Loch 8 Fig. 3 oder einen Rastzapfen 4 Fig. 1 aufweisenden komplementären Basisplatte 3 versehen sein und durchaus auch in entgegengesetzter Montagerichtung an der Angelschnur, bzw. Angelpose befestigt werden, d.h. die Bohrung 5 Fig. 2 kann im Längsbereich der Angelpose 6 angeordnet sein, stets jedoch im Montagebereich der Tunnelschnuröse 1, wodurch, insbesondere bei Angelposen die eine Spitze an der Unterseite aufweisen, das Festlegen der Tunnelschnuröse 1 in deren Längsbereich wahlweise mit dem Rastzapfen 4 Fig. 1 oder dem Kalter 7 erfolgen kann, indem eine solche Angelpose mit der Spitze in das Loch 8 Fig. 3 einer ein derartiges Loch enthaltenden Basisplatte eingesteckt wird, d.h., die Bohrung 5 Fig. 2 ist fallweise unerforderlich.

Die Tunnelschnuröse 1 ist kostengünstig herstellbar, wie beispielsweise aus einem einen kleinen Querschnitt aufweisenden Kunststoffschlauch oder Kunststoffrohr und ist einfach zu befestigen. Der Schlauch oder das Rohr wird an bestimmten Stellen beispielsweise durch Anwendung von Ultraschall so verformt, bzw. verschweißt, daß eine an eine Durchführungsöffnung sich beidseitig anschließende Basisplatte in abwechselnder Anreihung entsteht. Auf den so gebildeten Basisplatten werden jeweils zwei, in gewissem Abstand zueinander angeordnete Löcher ausgestanzt. Damit ist eine Tunnelschnuröse geschaffen, die bei einer entsprechenden Basisplatte im Abstand derer Löcher bedarfsweise vereinzelbar ist und mittels einer Ködernadel, problemlos, an die Angelschnur angebracht werden kann.

## Patentansprüche

1. Tunnelschnuröse für Angelposen, die zumindest an einer Längsseite mit einer einen Rastzapfen aufweisenden komplementären Basisplatte versehen ist und von der Angelschnur ausgehend, für den Einsatz von Angelposen mit unterschiedlicher Gestalt vorgesehen ist,
**dadurch gekennzeichnet**, daß auf der Basisplatte (3) ein durchgehendes Loch (8) angeordnet sein kann, wobei bei einer Basisplatte (3) die ein Loch (8) hat, die Ausmaße des Lochs (8) so ausgelegt sind, daß der Rastzapfen (4) mit der Rückseite in das Loch (8) selbsthemmend eingesteckt werden kann, daß darüberhinaus der Rastzapfen (4), in das Loch (8) in Richtung von unten nach oben oder umgekehrt einrastbar ist und daß bei einer Angelpose (6) die eine Bohrung (5) hat, die Ausmaße der Bohrung (5) so ausgelegt sind, daß der Rastzapfen (4) mit der Rückseite in die Bohrung (5), selbsthemmend eingesteckt werden kann;

2. Tunnelschnuröse für Angelposen nach Anspruch 1, dadurch gekennzeichnet, daß der Rastzapfen (4) in axialer Richtung geschlitzt ist und aus zähelastischen mit Federeigenschaften versehenen, vorzugsweise thermoplastischen Kunststoff besteht;

3. Tunnelschnuröse für Angelposen nach Anspruch 1, dadurch gekennzeichnet, daß die Tunnelschnuröse (1) gerade ausgerichtet oder gering gewunden ausgeführt sein kann;

4. Tunnelschnuröse für Angelposen nach Anspruch 1 bis 3 dadurch gekennzeichnet, daß der Halter (7), zwei, auf einer Ebene liegende Öffnungen mit unterschiedlichen Durchmesser hat und aus einen vorzugsweise elastischen Material besteht.
